# EUROPEAN PATENT SPECIFICATION

(11) **EP 2 197 609 B1**
(45) Date of publication and mention of the grant of the patent: **08.01.2014**
(21) Application number: 08787501.9
(22) Date of filing: 27.08.2008
(51) Int. Cl.: B23B 5/12

(54) **PEELING MACHINE FOR BARS, TUBES OR SIMILAR OBLONG PRODUCTS**
SCHÄLMASCHINE FÜR STANGEN, ROHRE ODER ÄHNLICHE LANGE WERKSTÜCKE
DÉROULEUSE POUR BARRES, TUBES OU PIÈCES OBLONGUES ANALOGUES

(30) Priority: 10.09.2007 IT UD20070163
(43) Date of publication of application: 23.06.2010
(73) Proprietor: Danieli & C. Officine Meccaniche SpA, 33042 Buttrio (Udine) (IT)
(72) Inventor: MATTANZA, Carlo, I-25100 Brescia (IT); LAVARONI, Andrea, I-33047 Remanzacco (IT)
(74) Representative: Petraz, Davide Luigi
(86) International application number: PCT/EP2008/061203
(87) International publication number: WO 2009/033951

(56) References cited:
- EP-A- 0 501 107
- DE-A1- 1 752 341
- GB-A- 191 215 822
- US-A- 4 471 521

## Description

### FIELD OF THE INVENTION

The present invention concerns a peeling machine according to the preamble of claim 1, for bars, tubes or similar oblong products, which comprises a plurality of tools disposed radially on a rotary head, in a central cavity of which the product to be worked is able to run axially, drawn and/or thrust by feed means. The tools are able to reduce the diameter of the product to be worked, by removing chip. A first motor means is able to make the tool-bearing head rotate, and a second motor means is able to command the simultaneous and radial displacement of the tools in order to adjust their distance from the product to be worked, also while the tool-bearing head is rotating. An exemplary peeling machine is known from EP-A-0 501 107.

### BACKGROUND OF THE INVENTION

The peeling machine is a machine tool which removes chip, with functions similar to those of a lathe. Whereas in the lathe the piece to be worked rotates and a single tool performs the relative feed, in the peeling machine there are a plurality of tools that rotate around the piece while it advances.

The tools, also called inserts or cutters, are normally rectangular in shape, or triangular, and are mounted on suitable insert-bearing cartridges.

Peeling machines are known in which the tools are adjusted radially by means of a conical bushing or a worm screw; however, both these known solutions do not allow to annul the plays, and this is a disadvantage for the working accuracy and therefore for the tolerances in size and, mainly, shape (in particular the triangular nature which the market requires, with minimum values to reduce times and costs of grinding and other finishing) amplified by the defects caused by rolling and other productive processes which, with current techniques, are not completely eliminated. Furthermore, due to the imperfect radial adjustment of the cutters, unwanted helical impressions are generated on the piece worked.

Finally, due to said plays, the adjustment of the feed mechanism of the tools must be carried out rather frequently.

One purpose of the present invention is to achieve a peeling machine in which the radial adjustment of the tools can be made, in a simple and controlled manner, also when the machine itself is operating, that is, without needing to interrupt the normal working steps.

Another purpose of the present invention is to achieve a peeling machine which has a good rigidity, so that there is no play in the axial adjustment mechanisms of the tools, to obtain more precise tolerances of size and shape (viz. triangular) of the worked product, given the same conditions, compared with the state of the art.

The Applicant has devised, tested and embodied the present invention to overcome the shortcomings of the state of the art and to obtain these and other purposes and advantages.

### SUMMARY OF THE INVENTION

The present invention is set forth in the independent claim, while the dependent claims describe other embodiments of the invention or variants to the main inventive idea.

In accordance with the above purpose, a peeling machine according to the present invention comprises feed means, able to feed axially each product to be worked, along a longitudinal axis thereof, and a rotary head, provided with a central through cavity, in which the product to be worked is able to run; the rotary head is able to rotate with respect to a fixed support, coaxially to the longitudinal axis, commanded by first motor means; and a plurality of tools, which are associated with corresponding adjustment units, are mounted on the rotary head.

The peeling machine also comprises an adjustment mechanism able to simultaneously activate said adjustment units in order to effect the micrometric adjustment of the radial position of the tools with respect to the longitudinal axis, also while the rotary head is rotating.

According to a characteristic feature of the present invention, each of said adjustment units comprises a calibrated screw associated with a hub, sliding linearly in a corresponding guide bushing keyed into a cavity of the rotary head. Said hub is provided with a pair of wedges, opposite and substantially parallel to each other, which are constantly in contact with two corresponding inclined planes of a slider, on which one of the tools is mounted. Together with the hub and the pair of wedges, the bushing allows an absolute rigidity which, combined with the absence of play, is the essential condition to obtain very tight tolerances and triangularity.

The adjustment mechanism essentially comprises a toothed wheel mounted rotatable on the rotary head, coaxially with the longitudinal axis and able to be made to selectively rotate by second motor means.

A plurality of gears engage with said toothed wheel, one for each of said tools and associated with the corresponding calibrated screw.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a front view of a peeling machine according to the present invention;
- fig. 2 is a section from II to II of fig. 1;
- fig. 3 is a section from III to III of fig. 2.

### DETAILED DESCRIPTION OF A PREFERENTIAL FORM OF EMBODIMENT

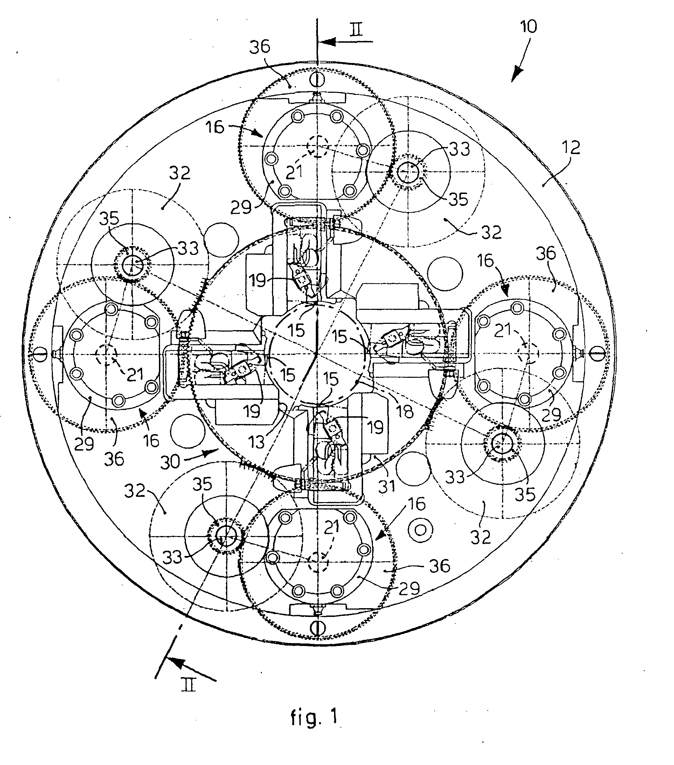

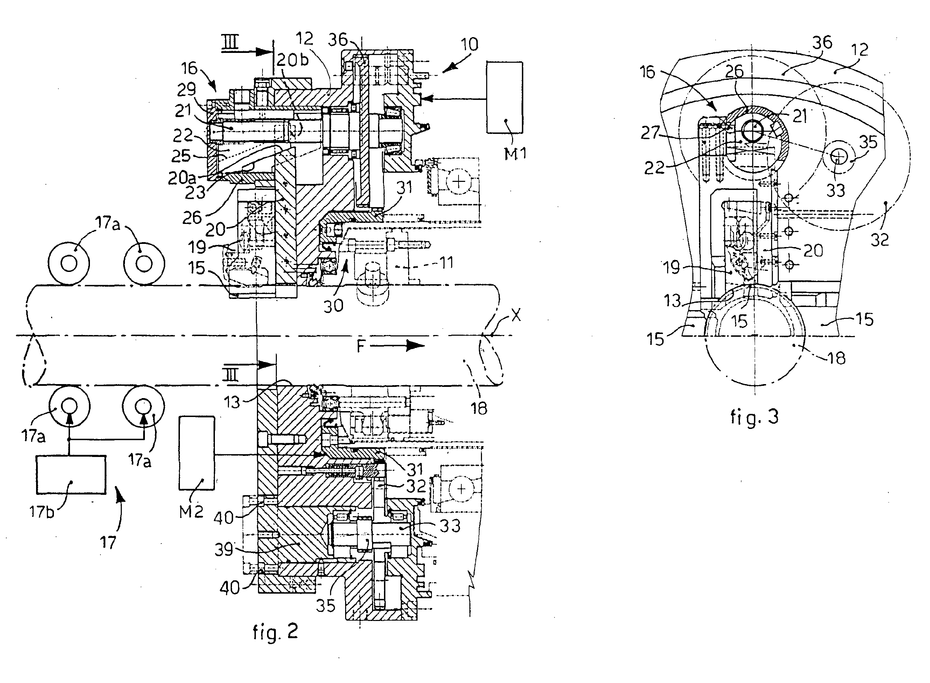

With reference to fig. 1, a peeling machine 10 according to the present invention comprises a robust rotary platform or head 12, which also functions as a flywheel, and is provided with a central through cavity 13 and is rotatable on a fixed support 11 (fig. 2). A plurality of tools 15 are mounted on the rotary head 12, in this case four, disposed at 90° with respect to each other (fig. 1) and each associated with a corresponding adjustment unit 16.

Furthermore, the peeling machine 10 comprises feed means 17 (fig. 2), for example consisting of feed rollers 17a commanded by a command member 17b which, in a known manner, are able to feed a product to be worked 18 along its longitudinal axis X in the direction indicated by the arrow F. The product to be worked 18 can be a bar, a tube, or any other oblong product, having a circular cross section.

A first motor means M1, for example comprising an electric motor of a known type, is able to make the rotary head 12 rotate with respect to the fixed support 11 and the product to be worked 18.

Each tool 15 is housed in its own cartridge 19 (figs. 1, 2 and 3), having limited weight and size, and also of a substantially known type.

Each of the four cartridges 19 is in turn mounted on a corresponding slider 20 (figs. 2 and 3), inserted in the rotary head 12.

Advantageously, the four sliders 20 are equipped with micrometric precision adjustment, in order to adjust the radial position of the tools 15 with respect to the product to be worked 18.

The micrometric adjustment, for each slider 20, is obtained by means of the corresponding adjustment unit 16, which comprises a calibrated screw 21, screwed onto a hub 22, which is shaped so as to have a first wedge 23 and a second wedge 25, opposite and substantially parallel to each other, that is, one disposed towards the inside of the rotary head 12 and the other disposed towards the outside. In particular, the two wedges 23 and 25 are constantly in contact with two corresponding inclined planes 20a and 20b (fig. 2) of the slider 20.

The hub 22 is able to slide in a guide bushing 26, associated with the slider 20. A contrasting tooth 27 is also associated with the latter.

The guide bushing 26, solid with the rotary head 12, rigidly contrasts the pulsating radial forces generated by the defects in the circular nature of the products to be worked 18, which tend, during peeling, to keep part of the primitive defects memorized.

A cover 29 is put to close each adjustment unit 16.

The simultaneous displacement in a radial direction of the four sliders 20 with respect to the center of the rotary head, that is, with respect to the axis X, is obtained by means of a single adjustment mechanism 30, which comprises a toothed wheel 31, mounted rotatable on the rotary head 12, coaxially with the longitudinal axis X. The toothed wheel 31 is able to be made selectively to rotate by second motor means M2 comprising, for example, an electric motor of the brushless type, of a substantially known type.

Four gears 32 also engage with the toothed wheel 31; they too are mounted rotatable on the rotary head 12, but disposed radially, angularly staggered by 90° with respect to each other, as shown in fig. 1. Each gear 32 has a shaft 33 on which a second gear 35 is also keyed, smaller than the corresponding gear 32 and in turn engaging with a toothed wheel 36, coaxially solid with the corresponding calibrated screw 21 (fig. 2).

Each pair of gears 32, 35 is held in the corresponding seating of the rotary head 12 by a hub 39, clamped by screws 40.

The radial adjustment of the four tools 15 with respect to the longitudinal axis X is achieved as follows.

In normal operating conditions, the product to be worked 18 is fed axially by the feed means 17, in the direction of the arrow F (fig. 2), and the rotary head 12 is made to rotate clockwise (fig. 1) by the first motor means M1, so that the tools 15 act on the cylindrical surface of the product to be worked 18, thus effecting the predetermined removal of chip, the so-called "peeling". The kinematism associated with the toothed wheel 31 causes the latter to rotate in the same direction of rotation and at the same speed as the rotary head 12, so that the gears 32 and 35 do not rotate around their axes, and nor do the calibrated screws 21. Consequently, the tools 15 remain in their preset radial position.

If it is desired to displace the tools 15 radially, in order to bring them closer to the longitudinal axis X and therefore to the cylindrical surface of the product to be worked 18, or to distance them from the latter, the second motor means M2 are used. This adjustment operation can advantageously be effected also during the peeling step of the product to be worked 18.

In fact, by selectively reducing the angular speed of the toothed wheel 31 with respect to that of the rotary head 12, we obtain a relative rotation in an anti-clockwise direction, of a desired amplitude, of the toothed wheel 31 and, by means of the gears 32 and 35, also of the toothed wheels 36 and the calibrated screws 21 solid therewith. Consequently, each hub 22 is screwed in, moving axially towards the inside of the rotary head 12 (on the right in fig. 2). The first wedge 23 of the hub 22, in turn, through the corresponding inclined plane 20a, moves the slider 20 and the tool 15 associated therewith, towards the longitudinal axis X.

Vice versa, by selectively increasing the angular speed of the toothed wheel 31 with respect to that of the rotary head 12, we obtain a relative rotation in a clockwise direction, of a desired amplitude, of the toothed wheel 31 and, by means of the gears 32 and 35, also of the toothed wheels 36 and the calibrated screws 21 solid therewith. Consequently, each hub 22 is unscrewed, moving axially towards the outside of the rotary head 12 (on the left in fig. 2). The second wedge 25 of the hub 22, in turn, through the corresponding inclined plane 20b, distances the slider 20 and the tool 15 associated therewith, away from the longitudinal axis X.

Advantageously, the sliders 20, the calibrated screws 21, the hubs 22 and the guide bushings 26 (which keyed on the rotary head 12 allow an absolute rigidity, an essential condition to obtain very tight tolerances and triangularity) are made of tempered steel with a hardness of about 58-60 HRC, which allows to maintain a long-lasting precision.

Furthermore, said components 20, 21, 22 and 26 are ground, including the planes of the wedges 23 and 25 and the threads of the calibrated screws 21 and the relative female threads on the hubs 22.

Therefore, the absence of axial play on each thread, and radial play between each hub 22 and the corresponding slider 20, together with the guide bushings 26, allow to obtain constant tolerances of size and geometry, lower than current systems.

Furthermore, advantageously, each slider 20 and the tool 15 associated with it can be adjusted individually and independently of the other sliders 20 and tools 15, so as to have interchangeability of the four cartridges 19 and thus not compromise the finishing of the product to be worked 18, and therefore prevent the formation of unwanted helical impressions on the finished product.

This individual adjustment is performed manually, with the peeling machine 10 still, by an operator, only during the assembly of the machine, or in the event of maintenance. The individual adjustment is performed as follows:
1) the cover 29 is removed;
2) the screws 40 are unscrewed;
3) the hub 39 is removed until abutment, in order to disengage the gear 35 from the toothed wheel 36;
4) the calibrated screw 21 is rotated to the right or left, until the desired setting is obtained;
5) the hub 39, the screws 40 and the cover 29 are re-assembled.

It is clear that modifications and/or additions of parts may be made to the peeling machine 10 as described heretofore, without departing from the field and scope of the present invention.

It is also clear that, although the present invention has been described with reference to some specific examples, a person of skill in the art shall certainly be able to achieve many other equivalent forms of peeling machine, having the characteristics as set forth in the claims and hence all coming within the field of protection defined thereby.

## Claims

1. Peeling machine for bars, tubes or similar oblong products to be worked (18), comprising: feed means (17) able to make each product to be worked (18) advance axially along a longitudinal axis (X) thereof; a rotary head (12), which is provided with a central through cavity (13), in which said product to be worked (18) is able to run, and is able to rotate with respect to a fixed support (11), coaxially with said longitudinal axis (X), commanded by first motor means (M1); a plurality of tools (15), each mounted on a relative slider (20) on said rotary head (12) and associated with corresponding adjustment units (16); and an adjustment mechanism (30) able to simultaneously activate said adjustment units (16) in order to effect the adjustment of the radial position of said tools (15) with respect to said longitudinal axis (X) also while said rotary head (12) is rotating, **characterized in that** each of said adjustment units (16) comprises a calibrated screw (21), screwed onto a hub (22) provided with a first wedge (23) and a second wedge (25), opposite and substantially parallel to each other, which are constantly in contact with two corresponding inclined planes (20a, 20b) of the corresponding slider (20) on which the tool (15) is mounted.

2. Peeling machine as in claim 1, **characterized in that** each hub (22) is able to slide in a guide bushing (26), associated with the corresponding slider (20), with which a contrasting tooth (27) is also associated.

3. Peeling machine as in claim 1 or 2, **characterized in that** said adjustment mechanism (30) comprises at least a first toothed wheel (31), mounted rotatable on said rotary head (12), coaxially with said longitudinal axis (X) and able to be made selectively to rotate by second motor means (M2).

4. Peeling machine as in claim 3, **characterized in that** said first toothed wheel (31) engages with a plurality of first gears (32), one for each of said tools (15) and also mounted rotatable on said rotary head (12), but disposed radially and uniformly staggered angularly with respect to each other.

5. Peeling machine as in claim 4, **characterized in that** each of said first gears (32) has a shaft (33) on which a second gear (35) is also keyed, in turn engaging with a second toothed wheel (36), coaxially solid with the corresponding calibrated screw (21).

6. Peeling machine as in any claim hereinbefore, **characterized in that** there are four tools (15), disposed at 90° with respect to each other.

7. Peeling machine as in any claim hereinbefore, **characterized in that** each of said tools (15) is housed in its own removable cartridge (19), each cartridge (19) housed on a corresponding slider (20) able to slide radially in said rotary head (12).

8. Peeling machine as in any claim hereinbefore, **characterized in that** the adjustment of the radial position of the tools (15) is effected with micrometric precision.

9. Peeling machine as in claim 3, **characterized in that** said second motor means (M2) comprises an electric motor of the brushless type.

## Patentansprüche

1. Schälmaschine für Stangen, Rohre oder ähnliche längliche zu bearbeitende Produkte (18), umfassend: Vorschubmittel (17), die fähig sind, jedes zu bearbeitende Produkt (18) dazu zu bringen, in der Achsenrichtung entlang seiner Längsachse (X) vorzurücken; einen Drehkopf (12), der mit einem mittleren Durchgangshohlraum (13) versehen ist, worin das zu bearbeitende Produkt (18) verlaufen kann, und der fähig ist, sich auf Anweisung eines ersten Motormittels (M1) in Bezug auf eine feste Halterung (11), die mit der Längsachse (X) koaxial ist, zu drehen; mehrere Werkzeuge (15), die jeweils an einem relativen Gleitstück (20) an dem Drehkopf (12) angebracht sind und mit entsprechenden Einstelleinheiten (16) verbunden sind; und einen Einstellmechanismus (30), der fähig ist, die Einstelleinheiten (16) gleichzeitig zu aktivieren, um die Einstellung der radialen Position der Werkzeuge (15) in Bezug auf die Längsachse (X) auch auszuführen, während sich der Drehkopf (12) dreht, **dadurch gekennzeichnet, dass** jede der Einstelleinheiten (16) eine kalibrierte Schraube (21) umfasst, die auf ein Anlageelement (22) geschraubt ist, welches mit einem ersten Keil (23) und einem zweiten Keil (25) versehen ist, die einander gegenüberliegen und im Wesentlichen parallel zueinander liegen und ständig mit zwei entsprechenden schrägen Flächen (20a, 20b) des entsprechenden Gleitstücks (20), an dem das Werkzeug (15) angebracht ist, in Kontakt stehen.

2. Schälmaschine nach Anspruch 1, **dadurch gekennzeichnet, dass** jedes Anlageelement (22) in einer Führungshülse (26) gleiten kann, die dem entsprechenden Gleitstück (20) zugehörig ist, dem auch ein Gegenzahn (27) zugehörig ist.

3. Schälmaschine nach Anspruch 1 oder 2, **dadurch gekennzeichnet, dass** der Einstellmechanismus (30) wenigstens ein erstes festes Zahnrad (31) umfasst, das koaxial mit der Längsachse (X) drehbar an dem Drehkopf (12) angebracht ist und durch ein zweites Motormittel (M2) selektiv zur Drehung gebracht werden kann.

4. Schälmaschine nach Anspruch 3, **dadurch gekennzeichnet, dass** das erste Zahnrad (31) mit mehreren ersten Ritzeln (32), einem für jedes der Werkzeuge (15), eingreift, die ebenfalls drehbar an dem Drehkopf (12) angebracht sind, aber radial und in Bezug zueinander winkelig gleichmäßig versetzt angeordnet sind.

5. Schälmaschine nach Anspruch 4, **dadurch gekennzeichnet, dass** jedes der ersten Ritzel (32) eine Welle (33) aufweist, auf die auch ein zweites Ritzel (35) gepasst ist, das wiederum mit einem zweiten Zahnrad (36) eingreift, welches koaxial fest mit der entsprechenden kalibrierten Schraube (21) verbunden ist.

6. Schälmaschine nach einem der vorhergehenden Ansprüche, **dadurch gekennzeichnet, dass** vier Werkzeuge (15) vorhanden sind, die in Bezug zueinander in Winkeln von 90° angeordnet sind.

7. Schälmaschine nach einem der vorhergehenden Ansprüche, **dadurch gekennzeichnet, dass** jedes der Werkzeuge (15) in einer eigenen abnehmbaren Kassette (19) untergebracht ist, wobei jede Kassette (19) an einem entsprechenden Gleitstück (20) untergebracht ist, das radial in dem Drehkopf (12) gleiten kann.

8. Schälmaschine nach einem der vorhergehenden Ansprüche, **dadurch gekennzeichnet, dass** die Einstellung der radialen Position der Werkzeuge (15) mit Mikrometergenauigkeit ausgeführt wird.

9. Schälmaschine nach Anspruch 3, **dadurch gekennzeichnet, dass** das zweite Motormittel (M2) einen Elektromotor vom bürstenlosen Typ umfasst.

## Revendications

1. Dérouleuse pour barres, tubes ou produits oblongs analogues destinés à être usinés (18), comprenant : des moyens d'alimentation (17) capables de faire avancer axialement chaque produit destiné à être usiné (18) le long d'un axe longitudinal (X) de celui-ci, une tête rotative (12), qui est munie d'une cavité traversante centrale (13), que ledit produit destiné à être usiné (18) est capable de traverser, et est capable de tourner par rapport à un support fixe (11), coaxialement avec ledit axe longitudinal (X), commandé par des premiers moyens moteurs (M1), une pluralité d'outils (15) chacun monté sur un coulisseau respectif (20) sur ladite tête rotative (12) et associé à des unités de réglage correspondantes (16), et un mécanisme de réglage (30) capable d'activer simultanément lesdites unités de réglage (16) afin d'effectuer le réglage de la position radiale desdits outils (15) par rapport audit axe longitudinal (X) également pendant que ladite tête rotative (12) est en rotation, **caractérisé en ce que** chacune desdites unités de réglage (16) comprend une vis calibrée (21), vissée sur un moyeu (22) muni d'un premier coin (23) et d'un second coin (25), opposés et sensiblement parallèles l'un par rapport à l'autre, qui sont en contact permanent avec deux plans inclinés correspondants (20a, 20b) de la glissière correspondante (20) sur lequel l'outil (15) est monté.

2. Dérouleuse selon la revendication 1, **caractérisée en ce que** chaque moyeu (22) est apte à coulisser dans une douille de guidage (26), associée à la glissière correspondante (20), avec laquelle une dent de contraste (27) est également associée.

3. Dérouleuse selon la revendication 1 ou 2, **caractérisée en ce que** ledit mécanisme de réglage (30) comprend au moins une première roue dentée (31), montée de manière rotative sur ladite tête rotative (12), coaxialement avec ledit axe longitudinal (X) et capable d'être mise en rotation de manière sélective par des second moyens moteurs (M2).

4. Dérouleuse selon la revendication 3, **caractérisée en ce que** ladite première roue dentée (31) vient en prise avec une pluralité de premiers engrenages (32), un pour chacun desdits outils (15) et également montés de manière rotative sur ladite tête rotative (12), mais disposés radialement et uniformément décalés angulairement les uns par rapport aux autres.

5. Dérouleuse selon la revendication 4, **caractérisée en ce que** chacun desdits premiers engrenages (32) présente un arbre (33) sur lequel un second engrenage (35) est également claveté, à son tour en prise avec une deuxième roue dentée (36), coaxialement en continuité avec la vis calibrée correspondante (21).

6. Dérouleuse selon l'une quelconque des revendications précédentes, **caractérisée en ce qu'**il y a quatre outils (15), disposés à 90° les uns par rapport aux autres.

7. Dérouleuse selon l'une quelconque des revendications précédentes, **caractérisée en ce que** chacun desdits outils (15) est logé dans sa propre cartouche amovible (19), chaque cartouche (19) étant logée sur un coulisseau correspondant (20) pouvant coulisser radialement dans ladite tête rotative (12).

8. Dérouleuse selon l'une quelconque des revendications précédentes, **caractérisée en ce que** le réglage de la position radiale des outils (15) est effectué avec une précision micrométrique.

9. Dérouleuse selon la revendication 3, **caractérisée en ce que** lesdits deuxièmes moyens moteurs (M2) comprennent un moteur électrique du type sans balai.
